# EUROPÄISCHE PATENTSCHRIFT

(11) **EP 4 077 062 B1**
(45) Veröffentlichungstag und Bekanntmachung des Hinweises auf die Patenterteilung: **04.06.2025**
(21) Anmeldenummer: 20830092.1
(22) Anmeldetag: 09.12.2020
(51) Int. Cl.: B60R 21/207

(54) **INSASSENSCHUTZVORRICHTUNG FÜR EIN FAHRZEUG**
OCCUPANT PROTECTION DEVICE FOR A VEHICLE
DISPOSITIF DE PROTECTION DES OCCUPANTS POUR UN VÉHICULE

(30) Priorität: 19.12.2019 DE 102019008850
(43) Veröffentlichungstag der Anmeldung: 26.10.2022
(73) Patentinhaber: Mercedes-Benz Group AG, 70372 Stuttgart (DE)
(72) Erfinder: GEISLER, Claus, 71083 Herrenberg (DE); WARWEL, Juergen, 70195 Stuttgart (DE); OEZTUERK, Abdulkadir, 71116 Gärtringen (DE)
(74) Vertreter: Novagraaf Group
(86) Internationale Anmeldenummer: PCT/EP2020/085321
(87) Internationale Veröffentlichungsnummer: WO 2021/122235

(56) Entgegenhaltungen:
- CN-B- 105 539 352
- DE-A1- 10 105 561
- DE-A1- 19 725 558
- US-A1- 2011 074 136
- US-A1- 2015 069 741
- US-A1- 2017 291 566
- US-A1- 2019 299 903

## Beschreibung

Die Erfindung betrifft eine Insassenschutzvorrichtung für ein Fahrzeug, die zumindest einen in einem Bereich eines Fahrzeugsitzes angeordneten und sich aus diesem Bereich heraus entfaltenden Airbag umfasst, der einem Insassen auf dem Fahrzeugsitz zugeordnet ist.

Aus der CN 105 539 352 ist eine Insassenschutzvorrichtung für ein Fahrzeug nach dem Oberbegriff des Anspruchs 1 bekannt.

Aus der DE 10 2013 017 346 A1 ist ein Fahrzeug mit zumindest einem im Fondbereich angeordneten Airbag bekannt. Der zumindest eine Airbag ist im Bereich eines eine Sitzfläche bildenden Sitzpolsters eines Fondsitzes derart angeordnet, dass der Airbag in Richtung der Fahrzeughochachse entfaltbar ist.

Darüber hinaus beschreibt die EP 3 187 379 A1 einen Airbag, welcher in einer Armlehne eines Fahrzeugsitzes angeordnet ist und sich aus dieser heraus entfaltet, wohingegen die US 2018/0086299 A1 und die DE 10 2009 016 885 A1 jeweils einen Airbag offenbaren, der in einer Sitzlehne, insbesondere in einer Seitenwange der Sitzlehne, angeordnet ist. Der Erfindung liegt die Aufgabe zugrunde, eine gegenüber dem Stand der Technik verbesserte Insassenschutzvorrichtung für ein Fahrzeug anzugeben.

Die Aufgabe wird erfindungsgemäß durch die in Anspruch 1 angegebenen Merkmale gelöst.

Vorteilhafte Ausgestaltungen der Erfindung sind Gegenstand der Unteransprüche.

Eine Insassenschutzvorrichtung für ein Fahrzeug umfasst zumindest einen in einem Bereich eines Fahrzeugsitzes angeordneten und sich aus diesem Bereich heraus entfaltenden Airbag, der einem Insassen auf dem Fahrzeugsitz zugeordnet ist. Erfindungsgemäß entfaltet sich der Airbag in Richtung einer Fahrzeughochachse nach oben, wobei der Airbag einen ballonförmigen Abschnitt und einen angrenzenden weiteren Abschnitt aufweist und in seiner Wirkstellung derart positioniert ist, dass der Airbag Beine und einen Unterkörper des Insassen umschließt und dieser Umschließungsbereich einen Aufprall- und Abstützbereich für einen Kopf und einen Oberkörper des Insassen bildet.

Mittels eines derart ausgebildeten Airbags kann ein Insassenschutz bei einem Frontalaufprall des Fahrzeuges optimiert werden, wobei der Airbag eine Ergänzung zu einem angelegten Sicherheitsgurt darstellt.

Da der Airbag im Bereich des Fahrzeugsitzes, insbesondere im Fahrzeugsitz, angeordnet ist, ist es nicht erforderlich einen Bauraum in einer Instrumententafel oder in einem Lenkrad zu nutzen, aus dem sich der Airbag entfaltet.

Insbesondere eignet sich die Insassenschutzvorrichtung mit dem Airbag für Insassen auf einem Fahrzeugsitz in hinteren Sitzpositionen und/oder in einer hinteren Sitzreihe des Fahrzeuges, beispielsweise für eine sogenannte Vis-à-vis-Sitzanordnung, bei welcher im Wesentlichen keine optimierte Schutzwirkung durch einen sich aus der Instrumententafel oder dem Lenkrad entfaltenden Airbag bestehen kann.

Der Airbag weist in einer Ausbildung eine Anzahl von Abstützbereichen auf, wobei ein Abstützbereich im Bereich seiner Anordnung am Fahrzeugsitz und ein weiterer Abstützbereich im Bereich der Beine des Insassen angeordnet oder ausgebildet sind. Mittels der Abstützbereiche stützt sich der Airbag selbst ab, wodurch eine Stabilität des Airbags und eine dadurch bedingte Schutzwirkung optimiert werden können.

In einer Ausführung weist der Airbag im ballonförmigen Abschnitt eine Aussparung auf, die zur Aufnahme des Oberkörpers des Insassen vorgesehen ist, wenn der Airbag in seine Wirkstellung positioniert ist. Die Aussparung ist an einer einer Sitzlehne zugewandten Seite des ballonförmigen Abschnittes angeordnet, wobei mittels der Aussparung weitestgehend ausgeschlossen werden kann, dass der Insasse durch den sich positionierenden Airbag eingeklemmt wird und/oder der Insasse beim Entfalten des Airbags durch diesen verletzt wird.

Der Airbag ist in einer Weiterbildung zweiteilig ausgebildet und ein jeweiliger Teilabschnitt entfaltet sich aus einem seitlichen Bereich des Fahrzeugsitzes in Richtung der Fahrzeughochachse nach oben, wobei die beiden Teilabschnitte seitlich des Fahrzeugsitzes sich gegenüberliegend angeordnet sind. Sind die beiden Teilabschnitte in ihrer Wirkstellung positioniert, ist der Insassen auf dem Fahrzeugsitz beidseitig abgestützt.

Dabei weist jeder Teilabschnitt in einer weiteren Ausführungsform einen ballonförmigen Abschnitt und einen weiteren Abschnitt auf, wobei der Umschließungsbereich von beiden Teilabschnitten des Airbags gebildet ist. Der Insasse befindet sich also zwischen den beiden Teilabschnitten und ist mittels dieser nach vorn und seitlich abgestützt, um ein Verletzungsrisiko des Insassen zumindest erheblich zu verringern.

Eine Ausbildung der Insassenschutzvorrichtung sieht vor, dass diese zusätzlich zumindest einen sich seitlich aus einer Sitzlehne des Fahrzeugsitzes entfaltenden weiteren Airbag umfasst. Mittels des zumindest einen sich seitlich aus der Sitzlehne entfaltenden weiteren Airbag ist der Insasse zusätzlich seitlich abgestützt, wobei mittels des weiteren Airbags der Insasse beispielsweise zu einem seitlichen Fahrzeugteil beabstandet ist, so dass weitestgehend ausgeschlossen werden kann, dass der Insasse an das seitliche Fahrzeugteil prallt.

Um den Airbag, die Teile und/oder den weiteren Airbag in die jeweilige Wirkstellung zu positionieren, ist in einer weiteren Ausbildung der Insassenschutzvorrichtung eine Anzahl von Gasgeneratoren vorgesehen, wobei jeweils zumindest ein Gasgenerator mit zumindest einem Airbag oder Teil des Airbags fluidisch gekoppelt ist. Insbesondere ist ein Gasgenerator jeweils einem Airbag oder jeweils einem Teil des Airbags zugeordnet, so dass die Airbags und der jeweilige Teil des Airbags vergleichsweise schnell befüllbar sind und ihre Wirkstellung einnehmen, um die Schutzwirkung für den Insassen zu optimieren.

In einer möglichen Weiterbildung ist die Anzahl der Gasgeneratoren in den Fahrzeugsitz integriert, so dass es nicht erforderlich ist, verhältnismäßig große Abstände zwischen dem Airbag, den Teilabschnitten und dem weiteren Airbag zu überwinden. Die Insassenschutzvorrichtung ist dadurch vergleichsweise kompakt ausgeführt.

Der Fahrzeugsitz ist in einer weiteren Ausführungsform um eine parallel zur Fahrzeughochachse verlaufende Drehachse drehbar gelagert, so dass es beispielsweise möglich ist, dass der Fahrzeugsitz derart im Fahrzeug positioniert werden kann, dass der Insasse sich von Angesicht zu Angesicht mit einem weiteren Insassen im Fahrzeug unterhalten kann.

Ausführungsbeispiele der Erfindung werden im Folgenden anhand von Zeichnungen näher erläutert.

Dabei zeigen:
- Fig. 1: schematisch eine Seitenansicht eines Fahrzeugsitzes mit einem Insassen und einer ausgelösten Insassenschutzvorrichtung in einer Ausführungsform,
- Fig. 2: schematisch eine Seitenansicht des Fahrzeugsitzes mit dem kollisionsbedingt beschleunigten Insassen und der ausgelösten Insassenschutzvorrichtung in der Ausführungsform gemäß Figur 1,
- Fig. 3: schematisch eine Draufsicht eines Fahrzeugsitzes mit einem Insassen und der ausgelösten Insassenschutzvorrichtung in einer weiteren Ausführungsform und
- Fig. 4: schematisch eine Draufsicht des Fahrzeuges mit dem kollisionsbedingt beschleunigten Insassen und der ausgelösten Insassenschutzvorrichtung in der weiteren Ausführungsform.

Einander entsprechende Teile sind in allen Figuren mit den gleichen Bezugszeichen versehen.

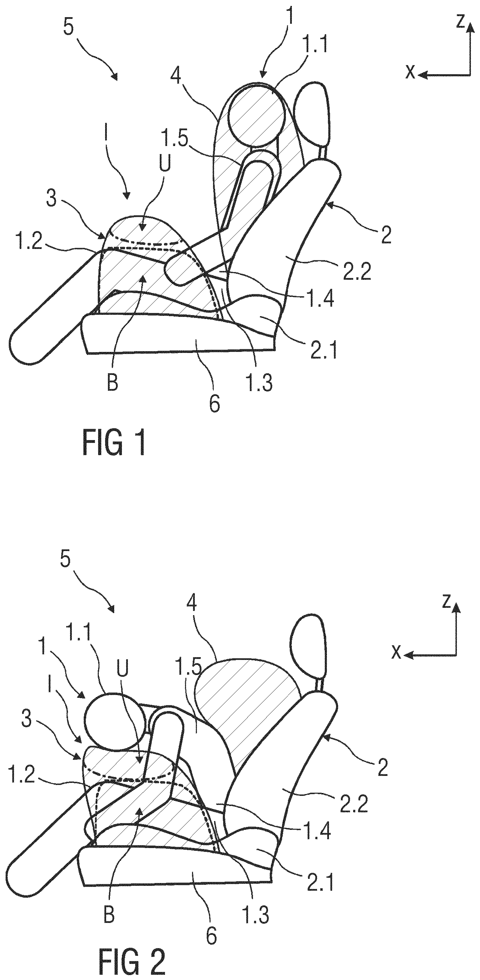

Die Figuren 1 und 2 zeigen jeweils eine Seitenansicht eines Insassen 1 auf einem Fahrzeugsitz 2 mit einer ausgelösten Insassenschutzvorrichtung I, die einen Airbag 3 und einen weiteren Airbag 4 umfasst.

Ein Fahrzeug 5, in dem der Fahrzeugsitz 2 angeordnet ist, verfügt über ein Assistenzsystem zum autonomen Fahrbetrieb, wobei eine Fahraufgabe vollumfänglich durch das Fahrzeug 5 ausgeführt wird.

Ein üblicherweise die Fahraufgabe ausführender Insassen 1 des Fahrzeuges 5 kann somit anderen Tätigkeiten nachgehen. Beispielsweise kann sich der Insasse 1 mit einem nicht näher dargestellten weiteren Insassen, welcher beispielsweise im Fondbereich des Fahrzeuges 5 sitzt, unterhalten.

Um sich von Angesicht zu Angesicht unterhalten zu können, ist der Fahrzeugsitz 2 um eine parallel zur Fahrzeughochachse z verlaufende Drehachse drehbar gelagert, so dass der Fahrzeugsitz 2 in Richtung des Fondbereiches positioniert werden kann.

In einer solchen Position ist der Insasse 1 in Bezug auf einen in ein Lenkrad oder eine Instrumententafel integrierten Frontalairbag, der sich aus dem Lenkrad oder der Instrumententafel heraus entfaltet, nicht optimal ausgerichtet. Eine Schutzwirkung des Frontalairbags kann somit für den Insassen 1 nicht sichergestellt werden, wobei der Insasse 1 mittels des Frontalairbags nicht zurückgehalten werden kann.

Im Kollisionsfall des Fahrzeuges 5 kann ein solcher Umstand dazu führen, dass der Kopf 1.1 des Insassen 1 aufgrund wirkender Beschleunigung mit seinen Knien 1.2 und/oder Beinen 1.3 kontaktiert, wodurch insbesondere der Kopf 1.1 und eine nicht näher gezeigte Halswirbelsäule des Insassen 1 vergleichsweise stark belastet werden.

Um das Verletzungsrisiko für den Insassen 1 in einer solchen Situation zumindest zu verringern, ist die im Folgenden beschriebene Insassenschutzvorrichtung I vorgesehen. Bei dem Fahrzeugsitz 2 handelt es sich gemäß dem vorliegenden Ausführungsbeispiel um einen Fahrzeugsitz 2 in einem Fondbereich des Fahrzeuges 5, wobei der Fahrzeugsitz 2 in Fahrzeuglängsrichtung x nach vorn, also in Fahrtrichtung des Fahrzeuges 5 positioniert ist.

Die Insassenschutzvorrichtung I umfasst in einer Ausführungsform die beiden Airbags 3, 4, wobei der Airbag 3 direkt am Fahrzeugsitz 2 in einem unteren Bereich, beispielsweise in einer Konsole 6, angeordnet ist und sich im Kollisionsfall des Fahrzeuges 5 aus dieser heraus entfaltet und seine in den Figuren 1 und 2 gezeigte Wirkstellung einnimmt. Insbesondere ist als unterer Bereich der Bereich zu versestehen, der unterhalb eines eine Sitzfläche bildenden Sitzpolsters 2.1 des Fahrzeugsitzes 2 angeordnet ist.

Denkbar ist auch, dass der Airbag 3 in einer nicht näher gezeigten seitlichen Armauflage, im Bereich einer verfahrbaren Mittelkonsole oder einer anderen sitzfesten und verfahrbaren Interieurkomponente angeordnet ist und sich aus dieser heraus entfaltet.

In der Wirkstellung des Airbags 3 erstreckt sich dieser abschnittsweise über die Beine 1.3 und um einen Unterkörper 1.4 des Insassen 1, wobei sich der Airbag 3 aus der Konsole 6 in Richtung einer Fahrzeughochachse z nach oben entfaltet und sich aufgrund seiner Form über den Insassen 1 erstreckt.

Mittels des in die Wirkstellung positionierten Airbags 3 ist der Insasse 1 am Fahrzeugsitz 2 fixiert, wobei der Insasse 1 zudem mittels des Airbags 3 auf der Seite seitlich abgestützt ist, auf welcher der Airbag 3 sich aus der Konsole 6 heraus entfaltet.

Wird der Insasse 1 aufgrund einer Kollision, insbesondere einer Frontalkollision, in Richtung der Fahrzeuglängsachse x nach vorn beschleunigt, prallt der Insasse 1 mit seinem Kopf 1.1 auf einen Umschließungsbereich U des Airbags 3, wobei ein Oberkörper 1.5 mittels des Umschließungsbereiches U abgestützt wird.

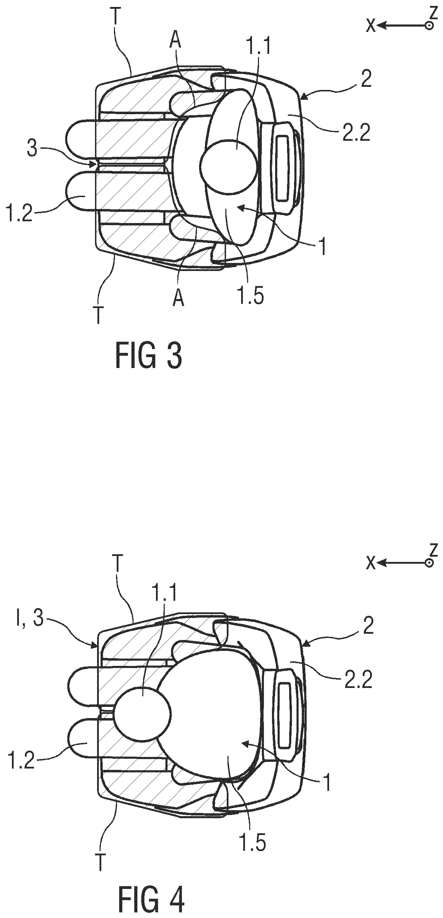

Zur Ausbildung des Umschließungsbereiches U weist der Airbag 3 eine in ähnlicher Weise in der Figur 3 gezeigte Aussparung A auf, die zur Aufnahme des Unterkörpers 1.4 und teilweise des Oberkörpers 1.5 des Insassen 1 dient. Dazu ist eine Öffnung der Aussparung A in Richtung des Insassen 1 und somit in Richtung einer Sitzlehne 2.2 angeordnet.

Mittels der Aussparung A wird weiterhin weitestgehend ausgeschlossen, dass der Insasse 1 zwischen Airbag 3 und Sitzlehne 2.2 eingeklemmt wird und/oder sich bei der Entfaltung des Airbags 3 verletzt.

In Richtung der Beine 1.3 ist der Airbag 3 eher flach ausgeführt, wobei der angrenzende Umschließungsbereich U mit der Aussparung A ballonförmig ausgeformt ist.

Alternativ kann ein Bereich des Airbags 3, welcher im Abschnitt der Beine 1.3 angeordnet ist, zylindrisch oder röhrenförmig ausgeformt sein, wobei es dabei erforderlich ist, die Abstützwirkung des Airbags 3 an den Beinen 1.3 sicherzustellen und dieser Abschnitt eine Auffangfläche für den Kopf 1.1 und den Oberkörper 1.5 des Insassen 1 bildet.

Zudem weist der Airbag 3 einen seitlichen Abstützungsbereich B zur seitlichen Fixierung des Insassen 1 auf dem Fahrzeugsitz 2 auf.

Der Airbag 3 kann in einem unteren Abschnitt länger ausgebildet sein, um den Insassen 1 seitlich abzustützen, wobei ein oberer Abschnitt zur Überdeckung der Beine 1.3 und, welcher die Aussparung A aufweist, kürzer ausgebildet ist.

Die Insassenschutzvorrichtung I umfasst darüber hinaus den sich seitlich aus der Sitzlehne 2.2, insbesondere aus einer Seitenwange, heraus entfaltenden weiteren Airbag 4, wobei auf einer gegenüberliegenden Seite der Sitzlehne 2.2 auch ein solcher weiterer Airbag 4 angeordnet sein kann. Mittels des weiteren Airbags 4 oder mittels der weiteren Airbags 4 ist der Insasse 1 auf dem Fahrzeugsitz 2 zu beiden Seiten abgestützt, so dass ein Anprallrisiko an ein Fahrzeugbauteil auf beiden Seiten des Fahrzeugsitzes 2 weitestgehend ausgeschlossen werden kann. Insbesondere dient der weitere Airbag 4 einer Verbesserung eines Seitenhaltes des Insassen 1, insbesondere seines Oberkörpers 1.5, auf dem Fahrzeugsitz 2.

Zur Befüllung der Airbags 3, 4 erforderliche Gasgeneratoren, die bei einer erfassten, dem Fahrzeug 5 bevorstehenden Kollision oder bei einer erfassten Kollision ausgelöst werden, sind in den Fahrzeugsitz 2, beispielsweise in die Konsole 6, integriert, wobei zumindest ein Gasgenerator mit jeweils einem der Airbags 3, 4 fluidisch verbunden ist.

In den Figuren 3 und 4 ist eine weitere Ausführungsform der Insassenschutzvorrichtung I dargestellt, wobei der Airbag 3 zweiteilig ausgebildet und zwei im Wesentlichen symmetrisch ausgebildete Teilabschnitte T umfasst, die sich gegenüberliegend am Fahrzeugsitz 2 angeordnet sind.

Mittels dieses zweiteilig ausgebildeten Airbags 3 ist der Insasse 1 im Kollisionsfall des Fahrzeuges 5 zu beiden Seiten des Fahrzeugsitzes 2 abgestützt und somit zu eventuell seitlich vorhandenen Fahrzeugteilen oder auch zu einem benachbarten Fahrzeugsitz 2 beabstandet.

In der Wirkstellung des mittels der beiden Teilabschnitte T ausgeführten Airbags 3 ist ebenfalls ein Umschließungsbereich U für den Insassen 1 gebildet, wobei an dem jeweiligen Teilabschnitt T eine Hälfte der Aussparung A zur Aufnahme des Insassen 1 ausgebildet ist.

Auch in der weiteren Ausführungsform prallt der Insasse 1 bei einer Kollision des Fahrzeuges 5 beschleunigungsbedingt mit seinem Kopf 1.1 auf den Umschließungsbereich U, mittels dessen Kollisionsenergie absorbiert wird und dadurch ein Verletzungsrisiko für den Insassen 1 verringert wird.

### Bezugszeichenliste

- 1: Insasse
- 1.1: Kopf
- 1.2: Knie
- 1.3: Bein
- 1.4: Unterkörper
- 1.5: Oberkörper
- 2: Fahrzeugsitz
- 2.1: Sitzpolster
- 2.2: Sitzlehne
- 3: Airbag
- 4: weiterer Airbag
- 5: Fahrzeug
- 6: Konsole

- A: Aussparung
- B: Abstützungsbereich
- I: Insassenschutzvorrichtung
- T: Teilabschnitte
- U: Umschließungsbereich

- x: Fahrzeuglängsachse
- z: Fahrzeughochachse

## Patentansprüche

1. Insassenschutzvorrichtung (I) für ein Fahrzeug (5), die zumindest einen in einem Bereich eines Fahrzeugsitzes (2) angeordneten und sich aus diesem Bereich heraus entfaltenden Airbag (3) umfasst, der einem Insassen (1) auf dem Fahrzeugsitz (2) zugeordnet ist,
wobei sich der Airbag (3) in Richtung einer Fahrzeughochachse (z) nach oben entfaltet, einen ballonförmigen Abschnitt und einen angrenzenden weiteren Abschnitt aufweist und in seiner Wirkstellung derart positioniert ist, dass der Airbag (3) Beine (1.3) und einen Unterkörper (1.4) des Insassen (1) umschließt und dieser Umschließungsbereich (U) einen Aufprall- und Abstützbereich für einen Kopf (1.1) und einen Oberkörper (1.5) des Insassen (1) bildet **dadurch gekennzeichnet, dass**
der Airbag (3) im ballonförmigen Abschnitt eine zur Aufnahme des Oberkörpers (1.5) des Insassen (1) ausgebildete Aussparung (A) aufweist..

2. Insassenschutzvorrichtung (I) nach Anspruch 1,
**dadurch gekennzeichnet, dass**
der Airbag (3) eine Anzahl von Abstützbereichen aufweist, wobei ein Abstützbereich im Bereich seiner Anordnung am Fahrzeugsitz (2) und ein weiterer Abstützbereich im Bereich der Beine (1.3) des Insassen (1) angeordnet oder ausgebildet ist.

3. Insassenschutzvorrichtung (I) nach Anspruch 1 oder 2,
**dadurch gekennzeichnet, dass**
der Airbag (3) zweiteilig ausgebildet ist und sich ein jeweiliger Teilabschnitt (T) aus einem seitlichen Bereich des Fahrzeugsitzes (2) in Richtung der Fahrzeughochachse (z) nach oben entfaltet, wobei die beiden Teilabschnitte (T) seitlich des Fahrzeugsitzes (2) sich gegenüberliegend angeordnet sind.

4. Insassenschutzvorrichtung (I) nach Anspruch 3,
**dadurch gekennzeichnet, dass**
jeder Teilabschnitt (T) einen ballonförmigen Abschnitt und einen weiteren Abschnitt aufweist, wobei der Umschließungsbereich (U) von beiden Teilabschnitten (T) des Airbags (3) gebildet ist.

5. Insassenschutzvorrichtung (I) nach einem der vorhergehenden Ansprüche,
**dadurch gekennzeichnet, dass**
zusätzlich zumindest ein sich seitlich aus einer Sitzlehne (2.2) des Fahrzeugsitzes (2) zur Abstützung des Oberkörpers (1.5) entfaltender weiterer Airbag (4) vorgesehen ist.

6. Insassenschutzvorrichtung (I) nach einem der vorhergehenden Ansprüche,
**dadurch gekennzeichnet, dass**
eine Anzahl von Gasgeneratoren vorgesehen ist, wobei jeweils zumindest ein Gasgenerator mit zumindest einem Airbag (3, 4) oder Teilabschnitt (T) des Airbags (3) fluidisch gekoppelt ist.

7. Insassenschutzvorrichtung (I) nach Anspruch 6,
**dadurch gekennzeichnet, dass**
die Anzahl der Gasgeneratoren in den Fahrzeugsitz (2) integriert ist.

8. Insassenschutzvorrichtung (I) nach einem der vorhergehenden Ansprüche,
**dadurch gekennzeichnet, dass**
der Fahrzeugsitz (2) um eine parallel zur Fahrzeughochachse (z) verlaufende Drehachse drehbar gelagert ist.

## Claims

1. Occupant protection device (I) for a vehicle (5), comprising at least one airbag (3) arranged in a region of a vehicle seat (2) and deploying from this region, which airbag is assigned to an occupant (1) in the vehicle seat (2), the airbag (3) deploying upwards in the direction of a vehicle vertical axis (z), having a balloon-shaped portion and an adjacent further portion, and being positioned in its operative position such that the airbag (3) encloses the legs (1.3) and lower body (1.4) of the occupant (1), and this enclosing region (U) forming an impact and support region for the head (1.1) and upper body (1.5) of the occupant (1),
**characterized in that**
the airbag (3) has a recess (A) in the balloon-shaped portion designed to accommodate the upper body (1.5) of the occupant (1).

2. Occupant protection device (I) according to claim 1,
**characterized in that**
the airbag (3) has a number of support regions, one support region being arranged or designed in the region of its arrangement on the vehicle seat (2) and a further support region being arranged or formed in the region of the legs (1.3) of the occupant (1).

3. Occupant protection device (I) according to either claim 1 or claim 2,
**characterized in that**
the airbag (3) is designed in two parts and each sub-portion (T) deploys upwards from a lateral region of the vehicle seat (2) in the direction of the vehicle vertical axis (z), the two sub-portions (T) being arranged opposite one another to the side of the vehicle seat (2).

4. Occupant protection device (I) according to claim 3,
**characterized in that**
each sub-portion (T) has a balloon-shaped portion and a further portion, the enclosing region (U) being formed by both sub-portions (T) of the airbag (3).

5. Occupant protection device (I) according to any of the preceding claims,
**characterized in that**
in addition, at least one further airbag (4) is provided which deploys laterally from a seat back (2.2) of the vehicle seat (2) to support the upper body (1.5).

6. Occupant protection device (I) according to any of the preceding claims,
**characterized in that**
a number of gas generators is provided, in each case at least one gas generator being fluidically coupled to at least one airbag (3, 4) or sub-portion (T) of the airbag (3).

7. Occupant protection device (I) according to claim 6,
**characterized in that**
the number of gas generators is integrated into the vehicle seat (2).

8. Occupant protection device (I) according to any of the preceding claims,
**characterized in that**
the vehicle seat (2) is mounted so as to be rotatable about an axis of rotation running parallel to the vehicle vertical axis (z).

## Revendications

1. Dispositif de protection pour passagers (I) pour un véhicule (5) comprenant au moins un sac gonflable (3) disposé dans une zone d'un siège de véhicule (2) et se déployant à partir de ladite zone, lequel sac gonflable est associé à un passager (1) sur le siège de véhicule (2),
dans lequel le sac gonflable (3) se déploie vers le haut dans la direction d'un axe vertical de véhicule (z), présente une section en forme de ballon et une autre section adjacente, et est positionné dans sa position active de telle sorte que le sac gonflable (3) recouvre des jambes (1.3) et une partie corporelle inférieure (1.4) du passager (1) et que ladite zone de recouvrement (U) forme une zone d'impact et de soutien pour une tête (1.1) et une partie corporelle supérieure (1.5) du passager (1)
**caractérisé en ce que**
le sac gonflable (3) présente, dans la section en forme de ballon, un évidement (A) réalisé pour recevoir la partie corporelle supérieure (1.5) du passager (1).

2. Dispositif de protection pour passagers (I) selon la revendication 1,
**caractérisé en ce que**
le sac gonflable (3) présente un certain nombre de zones de soutien, dans lequel une zone de soutien est disposée ou réalisée dans la zone de sa disposition sur le siège de véhicule (2) et une autre zone de soutien est disposée ou réalisée dans la zone des jambes (1.3) du passager (1).

3. Dispositif de protection pour passagers (I) selon la revendication 1 ou 2,
**caractérisé en ce que**
le sac gonflable (3) est réalisé en deux parties et une section partielle (T) respective se déploie vers le haut à partir d'une zone latérale du siège de véhicule (2) dans la direction de l'axe vertical de véhicule (z), dans lequel les deux sections partielles (T) sont disposées en face l'une de l'autre sur le côté du siège de véhicule (2).

4. Dispositif de protection pour passagers (I) selon la revendication 3,
**caractérisé en ce que**
chaque section partielle (T) présente une section en forme de ballon et une autre section, dans lequel la zone de recouvrement (U) est formée par les deux sections partielles (T) du sac gonflable (3).

5. Dispositif de protection pour passagers (I) selon l'une des revendications précédentes,
**caractérisé en ce que**
au moins un autre sac gonflable (4) se déployant latéralement à partir d'un dossier de siège (2.2) du siège de véhicule (2) est en outre prévu pour le soutien de la partie corporelle supérieure (1.5).

6. Dispositif de protection pour passagers (I) selon l'une des revendications précédentes,
**caractérisé en ce que**
un certain nombre de générateurs de gaz est prévu, dans lequel au moins un générateur de gaz est respectivement accouplé de manière fluidique à au moins un sac gonflable (3, 4) ou à une section partielle (T) du sac gonflable (3).

7. Dispositif de protection pour passagers (I) selon la revendication 6,
**caractérisé en ce que**
le certain nombre de générateurs de gaz est intégré dans le siège de véhicule (2).

8. Dispositif de protection pour passagers (I) selon l'une des revendications précédentes,
**caractérisé en ce que**
le siège de véhicule (2) est monté de manière à pouvoir tourner autour d'un axe de rotation s'étendant parallèlement à l'axe vertical de véhicule (z).
